# EUROPÄISCHE PATENTSCHRIFT

(11) **EP 1 756 643 B1**
(45) Veröffentlichungstag und Bekanntmachung des Hinweises auf die Patenterteilung: **08.10.2008**
(21) Anmeldenummer: 05716353.7
(22) Anmeldetag: 24.03.2005
(51) Int. Cl.: G02B 21/00, G02B 21/24, G02B 7/16

(54) **TUBUSREVOLVER MIT MINDESTENS VIER STELLUNGEN ZUR EIN- UND AUSKOPPLUNG VON LICHT IN EIN BZW. AUS EINEM LASER-SCANNING MIKROSKOP**
TUBE-TYPE REVOLVER WITH AT LEAST FOUR POSITIONS FOR INJECTING OR EXTRACTING LIGHT INTO OR FROM A LASER SCANNING MICROSCOPE
REVOLVER A TUBE COMPRENANT AU MOINS QUATRE POSITIONS PERMETTANT L'ENTREE DE LUMIERE DANS UN MICROSCOPE A BALAYAGE LASER, ET LA SORTIE DE LUMIERE DE CELUI-CI

(30) Priorität: 31.03.2004 DE 102004016433
(43) Veröffentlichungstag der Anmeldung: 28.02.2007
(73) Patentinhaber: Carl Zeiss MicroImaging GmbH, 07745 Jena (DE)
(72) Erfinder: SCHAU, Dieter, 07778 Lehesten (DE); KÜHN, Peter, 07743 Jena (DE); GOELLES, Michael, 07745 Jena (DE); FUNK, Jörg-Michael, 07743 Jena (DE)
(74) Vertreter: Geyer, Fehners & Partner
(86) Internationale Anmeldenummer: PCT/EP2005/003147
(87) Internationale Veröffentlichungsnummer: WO 2005/096057

(56) Entgegenhaltungen:
- WO-A-20/04077121
- US-A1- 2002 135 870
- US-B1- 6 392 796

## Beschreibung

Die zweckmäßige Kombination geeigneter Methoden bildet den Schüssel in der Mikroskopie. Die Schaffung vielfältiger Koppelstellen am Mikroskop wird daher zunehmend ein Grundanspruch der Forschung.

Eine Reihe von Schnittstellen zur Beleuchtung in Auflicht und Durchlicht existieren bereits und werden standardmäßig genutzt [DE 19 702 753 A1]. Der Einbau moderner Manipulationsmöglichkeiten, wie einer Laserpinzette oder das Verfahren der non- descannt Detektion in Kombination mit der Laser-Scanning-Mikroskopie stellen hohe Anforderungen an das Gerätekonzept und die Konstruktion von Tuben, die darüber hinaus noch die klassische VIS-Beobachtung oder eine Kameraaufzeichnung leicht ermöglichen sollen.

Insbesondere erfordert die Konstruktion einfacher Tuben mit *N* Auskoppelmöglichkeiten einen enormen Platzbedarf, nämlich 2*N*-1 Prismenbreiten. Herkömmliche Tuben verfügen daher über maximal drei Schaltstellungen. Die Verlagerung der nicht benötigten Prismen in eine zweite Dimension ermöglicht unter zweckmäßiger Nutzung kombinierter Schleberstellungen eine weitere Reduktion des Platzbedarfs [EP 0 842 449 B1].

In der US 6.392,796 B1 wird ein Wechselsystem für optische Komponenten beschrieben, welches für den Einsatz in Mikroskopen gedacht ist und dazu geeignet ist, verschiedene optische Komponenten in den Strahlengang in der Nähe des Objektivs zu bringen. Auf einem Revolverteller sind sogenannte Reflektorblöcke angeordnet, von denen jeder drei Öffnungen für den Lichtdurchtritt aufweist. Das durch eine Öffnung eintretende Licht kann durch die zwei anderen austreten, diese Richtungen sind jeweils für alle Reflektorblöcke identisch.

### Erfindung:

Gegenstand der Erfindung ist ein platzsparender Tubus mit mindestens 4 Ausgängen, von denen einer für die visuelle Beobachtung, einer für die Kamera, einer für ein Laser-Scanning-Mikroskop (LSM) und ein Kanal für eine mit dem LSM zu kombinierende Methode wie das NDD-Verfahren oder einen Manipulationslichtstrahl oder ein zweites Scanmikroskop oder eine Laserpinzette vorgesehen ist. Die Schaltung kann wahlweise motorisch oder manuell erfolgen.
Erfindungsgemäß wurde erkannt, daß sich der Platzbedarf in einer Ebene reduzieren läßt, wenn die nicht genutzten Schalterstellungen keinen zusätzlichen Raum einnehmen. Sie wurden daher auf einem Ring angeordnet. Die Kombination mit Schalterstellungen in mindestens einer weiteren Ebene führt zu einer dicht gepackten Schalteinheit.

Ein Teil der zur Auskopplung erforderlichen Optik befindet sich auf einem Tubuslinsenrevolver und lenkt das in den Tubus eintretende Licht in die entsprechenden Kanäle um. Dies wird für
- den VIS-Ausgang durch gemeinsame Rotation von Tubuslinse und Bauemfeindprisma in der unteren Ausspiegelebene,
- den Fotoausgang durch gemeinsame Rotation von Tubuslinse und einem Glaskörper, der aus einem 90-Grad-Prisma und einem geeignetem Glasweg zusammengekittet ist,
- den LSM-Ausgang durch gemeinsame Rotation von mindestens einem Strahlteiler und LSM-Tubuslinse,
- den NDD-Ausgang durch gemeinsame Rotation von mindestens einem Strahlteiler und einer LSM-Tubuslinse
im Tubusrevolver erreicht.

Bestandteil sind fachübliche Variationen sowie die Umkehr von Beobachtungs- und Aufzeichnungsstrahlengang.

### Detailbeschreibung:

Über einen Motor M und einen Zahnriemen R erfolgt der Antrieb des drehbaren Tubusrevolvers.

In Fig.1 (Position LSM) wird der vom Objekt kommende Strahlengang über Spiegel S1, S2 zunächst seitlich und dann vom Okular weg in Richtung der Scanner des LSM umgelenkt. Vorteilhaft ist hier, daß der zum LSM gelangende Strahl bezüglich der Drehachse des Tubusrevolvers durch die seitliche Ablenkung durch Spiegel S1 eine außermittige Position erhält, so daß trotz des kompakten Aufbaus keines der für die anderen Ausgänge erforderlichen Elemente im Wege steht.

In Fig.2 (Position TV) ist eine Drehung des Tubusrevolves um 90 Grad erfolgt. Das vom Objekt kommende Licht wird über einen Spiegel S5 und ein Glaselement G zum Wegausgleich auf einen seitlichen TV Port TVP umgelenkt, der als Ansatz für eine Kamera zur Bildaufzeichnung dient.

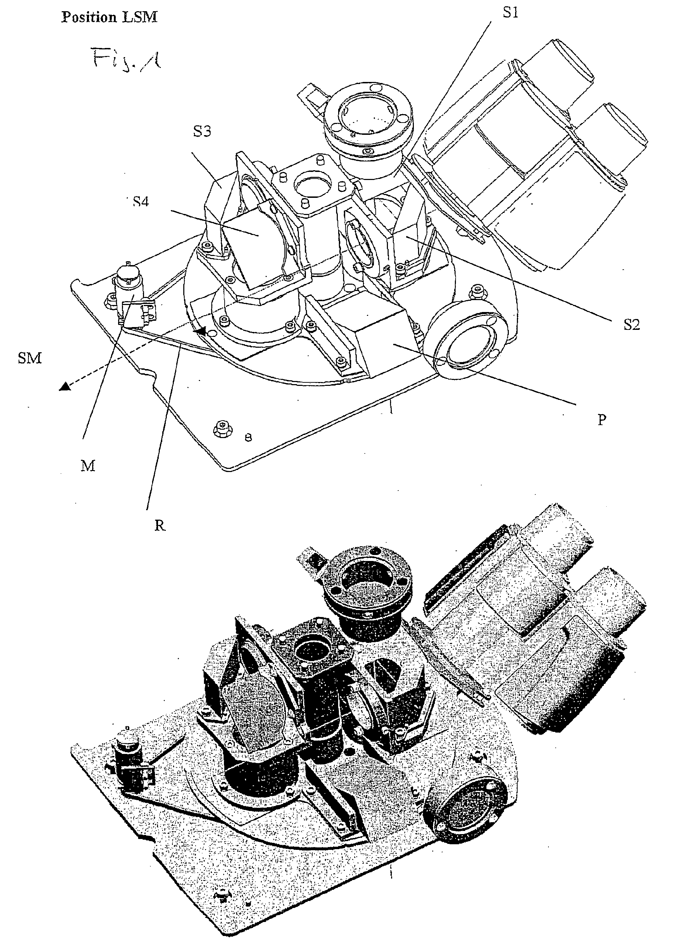

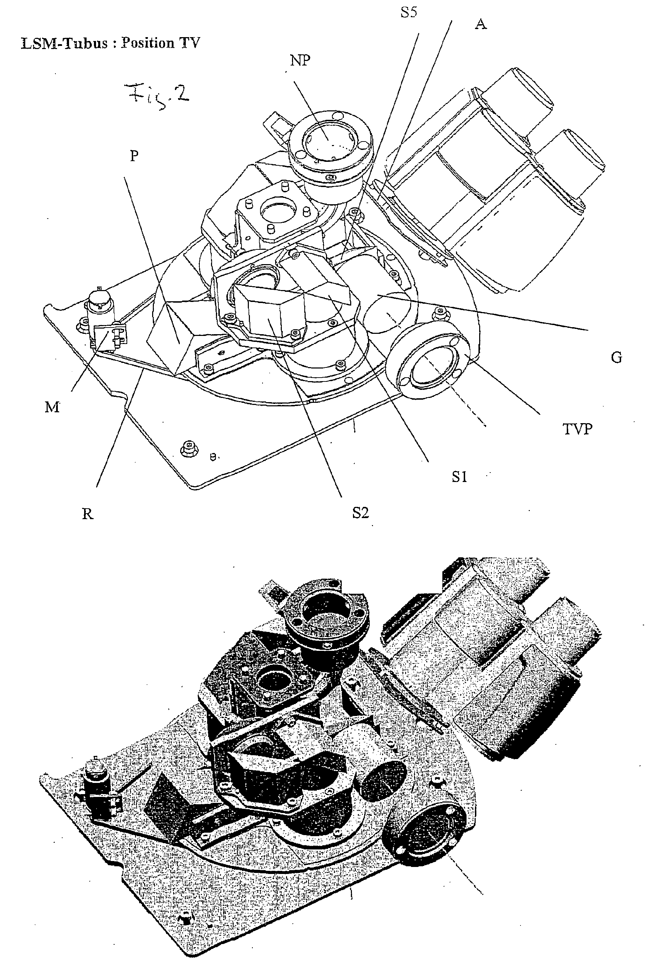

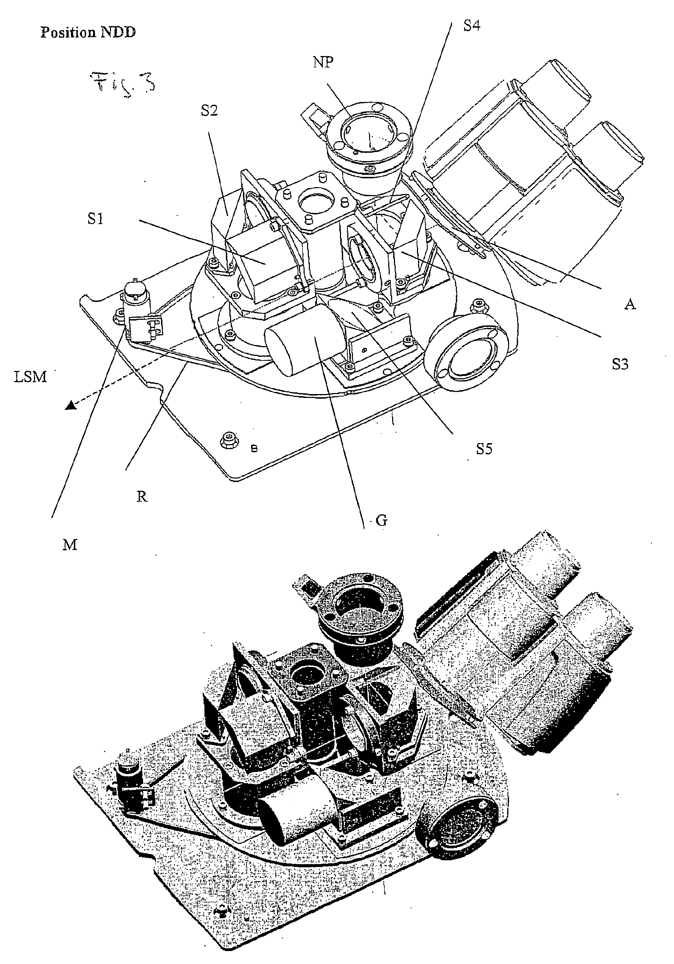

In Fig.3 (Position NDD) erfolgt in einer zu Fig.2 um 90 Grad gedrehten Position des Tubusrevolvers eine nicht- descannte Detektion des Objektlichtes über einen Teilerspiegel S4 noch oben in die Richtung eines NDD Ports NP, an den sich ein Detektionsstrahlengang anschließt. Gleichzeitig wird ein Teil des Objektlichtes analog zu Fig.1 durch S4 seitlich umgelenkt und vom Spiegel S3 in Richtung des LSM Strahlenganges außermittig umgelenkt, so daß gleichzeitig descannt und non- descannt detektiert wird. Durch die Anordnung der Elemente für den LSM bzw. NDD/LSM Strahlengang um 180 Grad versetzt ist es vorteilhaft möglich, die seitliche Versetzung des LSM Strahlenganges zweimal zu realisieren.

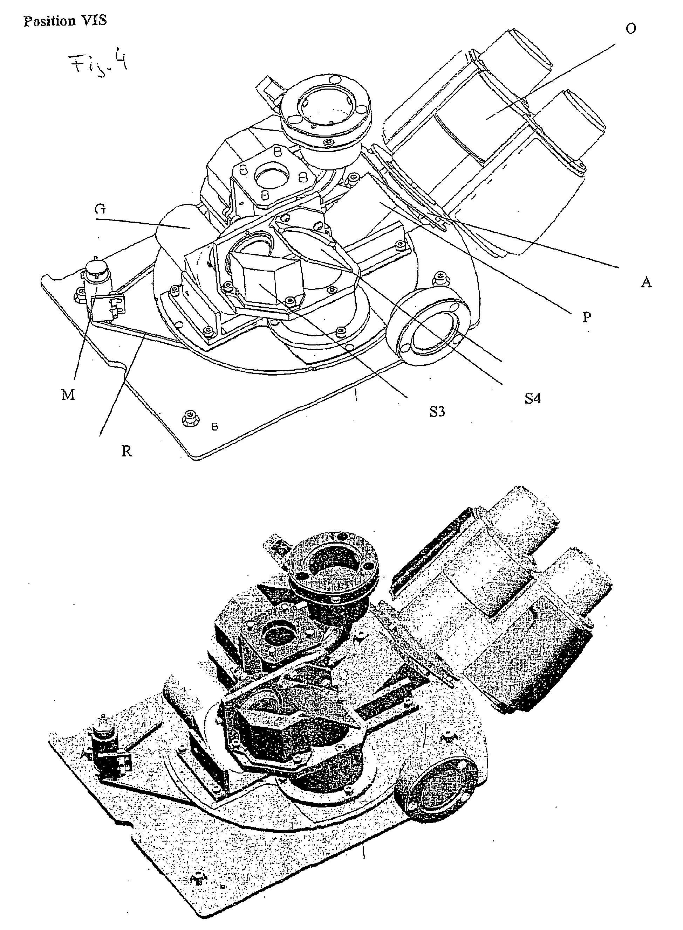

In Fig.4 (Position VIS) erfolgt in einer wiederum um 90 Grad gedrehten Tubusrevolverposition über ein Dachkantprisma eine Umlenkung des Objektlichtes in Richtung eines Okulars O.

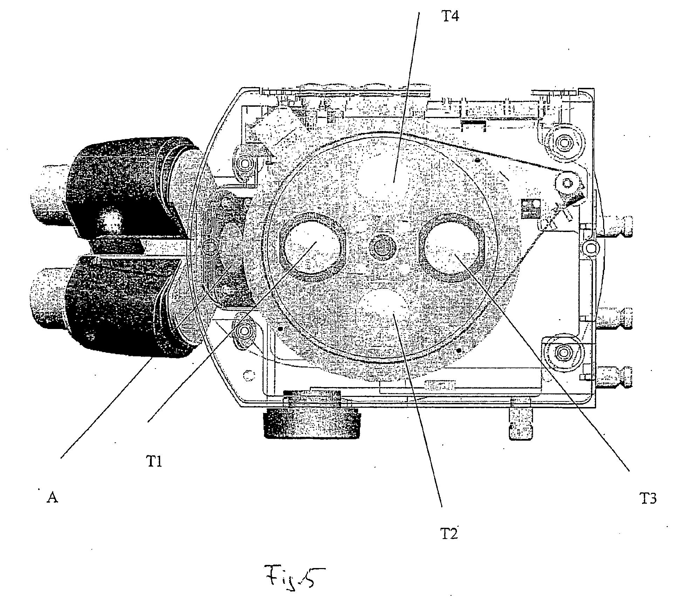

Fig.5 zeigt eine Unteransicht des Tubusrevolvers mit vier den jeweiligen Elementen in Fig.1-4 zugeordneten Tubuslinsen T1-T4 sowie einer Abdeckung A, die beim NDD Modus wie ein Verschluß bewegt wird, um Umgebungslicht fernzuhalten.

Vorteilhaft ist also für jede Tubusposition eine separate Tubuslinse vorgesehen, wobei die jeweils gegenüberliegenden Tubuslinsen für Beobachtung/Aufzeichnung bzw. LSM/LSM+NDD optisch gleich ausgeführt sein könnten.

Trotz der Vielzahl der Umschaltmöglichkeiten auf engstem Raum ist durch diese Anordnung der mechanische und Justieraufwand sehr gering, da die gegenseitige Position von Tubuslinse und Umlenkelementen zueinander fest und justierfrei bleibt.

## Patentansprüche

1. Tubusrevolver, mit
- vier auf einem Ring angeordneten, durch Drehung des Tubusrevolvers schaltbaren Schalterstellungen (LSM, TV, NDD, VIS) mit Umlenkelementen,
- **dadurch gekennzeichnet, daß**
- der Tubusrevolver für jede Tubusposition eine separate Tubuslinse (T1, T2, T3, T4) aufweist.
- die Umlenkelemente in der ersten Schalterstellung (LSM) als zwei Spiegel (S1, S2) ausgestaltet sind, und eintretendes Licht durch die erste Tubuslinse (T1) über die Spiegel (S1, S2) in eine erste Richtung eines ersten Kanals umgelenkt wird, wobei die erste Richtung bezüglich der Drehachse des Tubusrevolvers außermittig liegt,
- die Umlenkelemente in der zweiten Schalterstellung (TV) als ein als Spiegel (S5) ausgestaltetes 90°-Prisma und ein damit zusammengekitteter Glaskörper (G) ausgestaltet sind und eintretendes Licht durch die zweite Tubuslinse (T2) in eine zweite Richtung eines zweiten Kanals umgelenkt wird, wobei die zweite Richtung bezüglich der Drehachse des Tubusrevolvers senkrecht und außermittig liegt.
- die Umlenkelemente in der dritten Schalterstellung (NDD) als ein als Strahlteiler ausgestalteter Teilerspiegel (S4) und als ein Spiegel (S3) ausgestaltet sind, wobei der Teilerspiegel (S4) einen Teil von durch die dritte Tubuslinse (T3) eintretendem Licht in eine dritte Richtung eines dritten Kanals umlenkt und den anderen Teil in die erste Richtung,
- das Umlenkelement in der vierten Schalterstellung (VIS) als Bauemfeindprisma (P) ausgebildet ist und durch die vierte Tubuslinse (T4) eintretendes Licht in eine vierte Richtung eines vierten Kanals umlenkt,
- wobei die ersten drei Richtungen senkrecht aufeinander stehen.

2. Tubusrevolver nach Anspruch 1, **dadurch gekennzeichnet, daß** der Winkel zwischen zwei benachbarten Schalterstellungen auf dem Tubusrevolver jeweils 90° beträgt.

3. Tubusrevolver nach einem der Ansprüche 1 oder 2, **dadurch gekennzeichnet, daß** der Winkel zwischen erster Schalterstellung (LSM) und dritter Schalterstellung (NDD) 180° beträgt und die erste und dritte Tubuslinse (T1, T3) sowie die zweite und vierte Tubuslinse (T2, T4) jeweils optisch gleich ausgeführt sind.

4. Tubusrevolver nach einem der Ansprüche 1 bis 3, **dadurch gekennzeichnet, daß** der Tubusrevolver einen Verschluß (A) umfaßt, mit dem in der dritten Schalterstellung (NDD) Umgebungslicht aus der vierten Richtung blockiert wird.

5. Tubusrevolver nach einem der Ansprüche 1 bis 4, **dadurch gekennzeichnet, daß** der Tubusrevolver einen Antrieb aufweist, welcher einen Motor (M) und einen Zahnriemen (R) umfaßt, der den Tubusrevolver in der Weise antreibt, daß zwischen den vier Schalterstellungen (LSM, TV, NDD, VIS) gewechselt werden kann.

## Claims

1. Tube revolver, comprising
- four switch positions (LSM, TV, NDD, VIS), arranged on a ring and switchable by rotation of the tube revolver, with deflecting elements,
- **characterized in that**
- the tube revolver comprises a separate tube lens (T1, T2, T3, T4) for each tube position;
- the deflecting elements in the first switch position are provided as two mirrors (S1, S2) (LSM), and incident light is deflected through the first tube lens (T1) via the mirrors (S1, S2) in a first direction of a first channel, said first direction being eccentric with respect to the rotary axis of the tube revolver;
- the deflecting elements in the second switch position (TV) are provided as a 90° prism in the form of a mirror (S5) and a glass body (G) cemented thereto, and incident light is deflected through the second tube lens (T2) in a second direction of a second channel, the second direction being perpendicular and eccentric with respect to the rotary axis of the tube revolver;
- the deflecting elements in the third switch position (NDD) are provided as a splitter mirror (S4) in the form of a beam splitter and as a mirror (S3), said splitter mirror (S4) deflecting one part of the light that enters through the third tube lens (T3) in a third direction of a third channel and deflecting the other part of said light in the first direction;
- the deflecting element in the fourth switch position (VIS) is provided as a Bauernfeind prism and deflects light entering through the fourth tube lens (T4) in a fourth direction of a fourth channel,
- the first three directions being perpendicular to one another.

2. Tube revolver according to claim 1, **characterized in that** the angle between two adjacent switch positions on the tube revolver is 90° in each case.

3. Tube revolver according to any one of claims 1 or 2, **characterized in that** the angle between the first switch position (LSM) and the third switch position (NDD) is 180° and the first and third tube lenses (T1, T3) as well as the second and fourth tube lenses (T2, T4) respectively have the same optical design.

4. Tube revolver according to any one of claims 1 to 3, **characterized in that** the tube revolver comprises a shutter (A) by which ambient light from the fourth direction is blocked, in the third switch position (NDD).

5. Tube revolver according to any one of claims 1 to 4, **characterized in that** the tube revolver comprises a drive, which includes a motor (M) and a toothed belt (R) driving the tube revolver such that shifting is possible between the four switch positions (LSM, TV, NDD, VIS).

## Revendications

1. Révolver pour tube, comportant
- quatre positions de commutation (LSM, TV, NDD, VIS) avec des éléments de déviation, disposées en anneau et pouvant être prise par rotation du révolver pour tubes,
**caractérisé en ce que**
- le révolver pour tubes présente une lentille de tube (T1, T2, T3, T4) pour chaque position de tube,
- les éléments de déviation dans la première position de commutation (LSM) sont constitués par deux miroirs (S1, S2) et que la lumière entrant par la première lentille de tube (T1) est déviée par les miroirs (S1, S2) dans une première direction d'un premier canal, la première direction étant excentrée par rapport à l'axe de rotation du révolver pour tubes,
- les éléments de déviation dans la deuxième position de commutation (TV) sont réalisés par un prisme à 90° configuré comme un miroir (S5) et qu'un corps de verre lié à lui et la lumière entrant par la deuxième lentille de tube (T2) est déviée dans une deuxième direction d'un deuxième canal, la deuxième direction étant perpendiculaire et excentrée par rapport à l'axe de rotation du révolver pour tubes,
- les éléments de déviation dans la troisième position de commutation (NDD) sont réalisés par un miroir diviseur (S4) configuré en guide de rayons et par un miroir (S3), le miroir diviseur (S4) déviant une partie de la lumière entrant par la troisième lentille de tube (T3) dans une troisième direction d'un troisième canal et l'autre partie dans la première direction,
- l'élément de déviation dans la quatrième position de commutation (VIS) est réalisé par un prisme Bauernfeind (P) et dévie la lumière entrant par la quatrième lentille de tube (T4) dans une quatrième direction d'un quatrième canal,
- les trois premières directions étant perpendiculaires les unes aux aautres

2. Révolver pour tubes selon la revendication 1, **caractérisé en ce que** l'angle entre deux positions de commutation voisines sur le révolver pour tubes est chaque fois de 90°.

3. Révolver pour tubes delon l'une des revendications 1 ou 2 **caractérisé en ce que** l'angle entre la première position de commutation (LSM) et la troisième position de commutation (NDD) est de 180° et que la première et la troisième lentilles de tube (T1, T3) ainsi que la deuxième et la quatrième lentilles de tube (T2, T4) sont chaque fois réalisées de manière optiquement identique.

4. Révolver pour tubes delon l'une des revendications 1 à 3 **caractérisé en ce que** le révolver pour tubes comprend un fermeture (A) au moyen de laquelle, dans la troisième position de commutation (NDD), la lumière environnante provenant de la quatrième direction est bloquée.

5. Révolver pour tubes delon l'une des revendications 1 à 4 **caractérisé en ce que** le révolver pour tubes comporte un entrainement, comprenant un moteur(M) et une courroi crantée (R), qui entrain le révolver pour tubes de telle manière qu'on puisse effectuer un changement entre les quatre positions de commutation (LSM, TV, NDD, VIS).
